# EUROPEAN PATENT SPECIFICATION

(11) **EP 2 498 653 B1**
(45) Date of publication and mention of the grant of the patent: **07.01.2015**
(21) Application number: 10796109.6
(22) Date of filing: 10.11.2010
(51) Int. Cl.: A47J 36/24

(54) **PRODUCT WARMING DEVICE**
PRODUKTERWÄRMUNGSVORRICHTUNG
DISPOSITIF DE CHAUFFAGE DE PRODUIT

(30) Priority: 13.11.2009 GB 0919913
(43) Date of publication of application: 19.09.2012
(73) Proprietor: McWilliams, Kevin, Warwickshire CV37 8LN (GB)
(72) Inventor: McWilliams, Kevin, Warwickshire CV37 8LN (GB)
(74) Representative: Symons, Rupert Jonathan
(86) International application number: PCT/GB2010/051877
(87) International publication number: WO 2011/058357

(56) References cited:
- WO-A1-98/05184
- DE-A1- 2 551 379
- GB-A- 2 369 553
- US-A- 3 038 058
- US-A- 4 198 559
- US-A- 4 696 303
- US-A- 5 208 896
- US-B1- 7 034 256

## Description

This invention relates generally to product warming devices, for example warming devices for therapeutic and/or beauty products such as massage oils, creams or even beauty wax. More specifically, although not exclusively, this invention relates to such product warming devices for use in situations where it would be beneficial for the product to be maintained in a heated state.

Product warming is common practice in a range of salon therapeutic treatments. While most products are intended for use at room temperature, applied to the body either by hand, brush or hand mitt, there are significant benefits to pre-warming them prior to their application. For example, pre-heating reduces the viscosity of the product (e.g. particularly in wax based products), improves ease and evenness of application, causes local vasodilatation and increasing blood flow, enhances product absorption and gives a more sensuous and relaxing feel to the treatment.

Several devices have been developed for heating therapeutic and/or beauty products, for example prior to applying the product on the skin of a patient. Electrical appliances for warming facial products that are used for this purpose are not usually very flexible due to their trailing cable which ties the user to the nearest mains power socket. It is common practice in a professional treatment situation for the therapist to have to leave the treatment product in a remote location, moving back and forth between the patient and the product warming device.

Document US3038058 discloses a food warming dish. According to this document the dish (reservoir) is fixed on the tray (container) via screws.

Document US7034256b discloses a pop-corn heating device. The temperature of the warmed pop-corn is maintained via a heat-retaining layer.

Document US4696303 discloses a portable heat treatment system. A substance is heated by an element and then used in therapy; the phase change material is used as treatment product.

It is therefore a first non-exclusive object of the invention to provide a product warming device which is more flexible and/or better than known devices.

The invention is defined in the independent claim 1. Preferred embodiments are defined in the dependent claims.

After heating the product the container may be removed from the docking station and the product is maintained in a heated state, thereby precluding the need for continuous heating of the therapeutic or beauty product. US4982722, describes phase change materials which would be suitable for the device according to the present invention.

Preferably, the device comprises location means for locating the container relative to the docking station. More preferably, one of the container or docking station comprises a recess for receiving at least a portion, e.g. a projection, of the other of the container and docking station. The container may be releasably connected to the docking station by a connector, which may comprise the projection or recess.

The phase change material may at least partially surround the reservoir, preferably at least a lower portion and/or the base of the reservoir. The container may comprise an outer shell or layer or handle or member. The container may further comprise an insulating material and/or a thermal mass, e.g. of heat absorbing material, which may at least partially surround the reservoir and/or which may be located or positioned between the outer shell or layer and the reservoir, e.g. to retain heat energy within the product, reservoir and/or phase change material.

The device or container may include a heat storage unit, which may be in the form of an enclosed container that may contain the phase change material. The device or container may include one or more, e.g. a plurality of, conductive elements for facilitating thermal transfer between the reservoir and the phase change material. The device or container or heat storage unit may include a base and/or a top, at least one of which may include one or more, e.g. a plurality of, conductive elements, e.g. at least partially immersed or extending into the phase change material. The top of the heat storage unit may form a wall, e.g. a lower wall, of the reservoir or of a recess that receives and/or thermally contacts, in use, a removable reservoir, e.g. the base of such a removable reservoir.

It will be appreciated by those skilled in the art that the use of a phase change material provides controlled and sustained release, while conductive elements improve the flow of heat energy within the phase change material and/or from the phase change material to the reservoir.

The conductive element may comprise a conductive structure and/or it may be porous. Additionally or alternatively, the conductive element may comprise a web and/or a conductive matrix and/or honeycomb structure and/or wool and/or mesh, for example a knitted mesh, e.g. a wire knitted mesh, that may comprise a conductive material such as copper. The conductive element may comprise one or more elements, e.g. at least one of which may extend from an inner surface of the heat storage unit. The conductive element or elements may be short or long or elongate, e.g. it or they may comprise one or more, e.g. a plurality of, pillars, which may extend from an inner surface of the heat storage unit. Additionally or alternatively, the conductive element may comprise one or more walls.

Preferably, the conductive element is in thermal contact with the heat storage unit and/or secured thereto. More preferably, the conductive element is formed integrally with at least part of the heat storage unit.

In one class of embodiments, the conductive element comprises a plurality of conductive particles, which particles may comprise fibres and/or copper and/or graphite.

In some embodiments, the docking station comprises or is connected to the heater, wherein the connector may be configured to connect, for example thermally connect, the heater to the container or reservoir, e.g. such that the heater is in thermal contact with the reservoir, for example a lower portion such as the base of the reservoir, and/or the phase change material. In such arrangements, the device may advantageously comprise a safety means or trigger which may include a safety sensor or switch for detecting the presence of the container on the docking station and/or for detecting the connection between the container and the docking station. Preferably, the device is configured to selectively deactivate, in use, the heater or disconnect, in use, the heater from the power supply, e.g. when the safety means or trigger or sensor or switch detects the removal of the container from the docking station.

In other embodiments, the container comprises or is connected to the heater, wherein the connector may be configured to connect, for example electrically connect, the heater to the docking station or power source, e.g. such that the heater is supplied, in use, by the power source, e.g. when the container is connected to the docking station. The heater may be at least partially located or positioned adjacent or beneath the phase change material and/or reservoir and/or reservoir base. Additionally or alternatively, the heater may be located or positioned between the phase change material and the reservoir. Additionally or alternatively, the heater may at least partially surround or be at least partially surrounded by the phase change material.

The device, for example the docking station and/or container, may comprise one or more indicators, e.g. one or more light emitting diodes, which are suitable for or may be configured to indicate that the power supply is live or connected and/or indicate the activation of the heater and/or indicate that the container and/or reservoir and/or product and/or phase change material is at or within a predetermined, e.g. useable, temperature or temperature range. The device or container may comprise a temperature sensor for measuring the temperature of the container and/or reservoir and/or product and/or phase change material or for detecting that the container and/or reservoir and/or product and/or phase change material is at or within the or a predetermined, e.g. useable, temperature or temperature range.

The reservoir may comprise a depression or cup shaped reservoir, for example with an open top and is preferably formed of a thermally conductive material such as a metal, e.g. aluminium and/or it may be removable. The device or container or reservoir may comprise a lid or closure, for example a removable lid or closure. The docking station may comprise the power supply, e.g. one or more batteries, or may comprise a cable, for example an electrical cable, which may include a connector for connecting the cable to a supply, e.g. a mains supply. Additionally or alternatively, the power supply may be located or positioned in, on or adjacent the docking station. Additionally or alternatively, the container may comprise an energy, e.g. electrical energy, storage means such as one or more batteries, e.g. one or more rechargeable batteries. The energy storage means may comprise or be the power supply.

Preferably, the device is configured such that after a predetermined heating period, which may correspond to a predetermined quantity of heat energy is stored within the product and/or container and/or reservoir and/or phase change material and/or thermal mass, the indicator or indicators are configured to indicate that the product is ready for use. The predetermined heating period may be configured such that quantity of heat energy is such that the product temperature remains at a predetermined temperature or within a predetermined, e.g. useable, temperature range for a predetermined amount of time. The or a further indicator may be configured to indicate that the predetermined amount of time has or has not yet lapsed.

Embodiments will now be described by way of example only with reference to the accompanying drawings in which:
Figure 1 is a schematic view of a product warming device
Figure 2 is a a schematic view of a product warming device
Figure 3 is a schematic view of a product warming device
Figure 4 includes a series of optional container configurations showing different arrangements of the phase change material; and
Figure 5 is a schematic view of a product warming device and

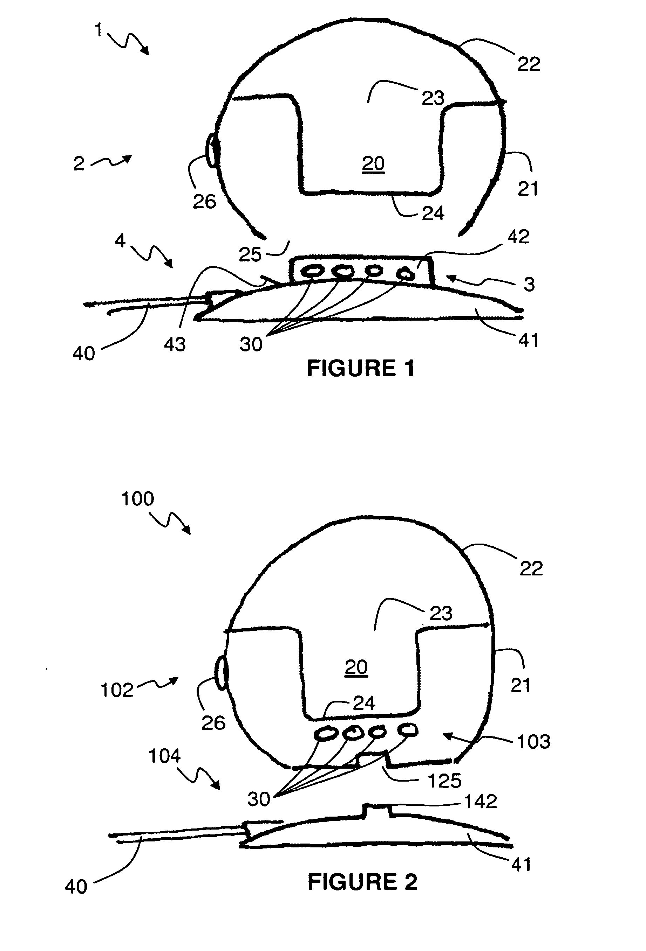

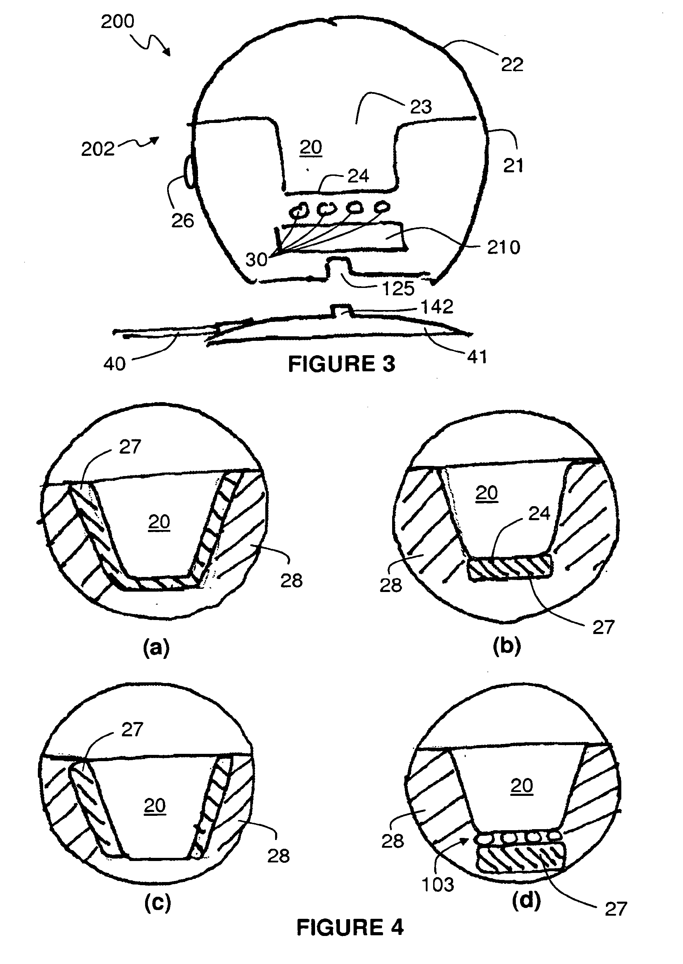

Referring now to Figures 1 and 4a to 4c, there is shown a therapeutic or beauty product warming device 1 for heating a product and maintaining the product in a heated state. The device 1 includes a container 2, a heater 3 for heating the product and a docking station 4 with an electrical cable 40 for connection to a power source (not shown).

The container 2 includes a reservoir 20 for containing a therapeutic or beauty product, for example massage oil or a cream or ointment, an outer shell 21 surrounding the reservoir 20 and a lid 22 for covering the reservoir 20. The reservoir 20 is substantially cylindrical in this embodiment with an open top 23 and a closed base 24. The outer shell 21 includes an open bottom 25 to provide a recess 25 with access to the base 24 of the reservoir 20. The container 2 also includes an indicator 26 in the form of a light emitting diode (LED) 26 for indicating that the product contained in the reservoir 20 is within a predetermined temperature range. It will be appreciated that the LED 26 is connected to a temperature sensor (not shown) which measures the temperature of the product.

The reservoir 20 is in thermal contact with a phase change material 27, which may be configured to surround the whole of the reservoir as shown in Figure 4a, the base 24 of the reservoir as shown in Figure 4b or the peripheral or circumferential surface thereof as shown in Figure 4c. The container 2 also includes an insulating material 28 such as an insulating foam or the like, which foam surrounds the phase change material and reservoir.

The heater 3 is incorporated in the docking station 4 in this embodiment and is configured to thermally contact the base 24 of the reservoir 20 when the container 2 is docked or connected to the docking station 4. The heater 3 is a positive temperature co-efficient (PTC) heater 3 in this embodiment with a plurality of heating elements 30. It is also envisaged that the heater 3 may comprise a resistive heater 3 or any other suitable type of heater.

The docking station 4 includes a base 41 and a projecting portion 42 which incorporates the heater 3. The projection 42 is received in the recess 25 of the container 2 when the container 2 is mounted or connected to the docking station 4, thereby providing a locating means for the container 2. The docking station 4 also includes a safety switch 43 for detecting the presence of the container 2 thereon. The safety switch 43 deactivates the heater 3 automatically when the container 2 is removed from the docking station 4.

In use, the container 2 is mounted on the docking station 4 such that the heater 3 is in thermal contact with the base 24 of the reservoir 20, the safety switch 43 is closed and the heater 3 heats the product via the wall of the reservoir 20. Simultaneously, the heater 3 passes thermal energy to the phase change material 27. After a predetermined heating period, a predetermined quantity of heat energy is stored within the product, the reservoir 20 and the phase change material 27, the LED 26 indicates that the product is ready for use. A user may then remove the container 2 from the docking station 4 and the product temperature remains within a useable temperature range for a predetermined amount of time by virtue of the phase change material 27 releasing heat thereto. When the temperature drops below the useable temperature range, the LED 26 dims or switches off, indicating that the product is no longer within the useable range.

Figure 2 shows a warming device 100 which device 100 is similar to the first embodiment wherein like references depict like features and these will not be described herein.

The warming device 100 differs from that of figure 1 in that the heater is incorporated in the container 102. The projection 142 and recess 125 in this example incorporate an electrical connection for transferring electrical power from the power supply (not shown) through the docking station 4 and to the heater 103 when the container 102 is mounted and connected to the docking station 104. Thus, there is no need for the safety switch 43 since the electrical connection between the heater 103 and the power source (not shown) is automatically disconnected.

As with the first example Figures 4a to 4c illustrate different positions for the phase change material 27 relative to the reservoir 20. Figure 4d shows an alternative configuration, wherein the heater 103 is located between the phase change material 27 and the reservoir 20.

Figure 3 shows a warming device 200 which device 200 is similar to the first and second examples wherein like references depict like features and these will not be described herein.

The device 200 of Figure 3 differs from the device 100 of figure 2 in that the container 202 includes a rechargeable battery 210. In use, the power supply (not shown) is electrically connected to the rechargeable battery 210 and the heater 103 simultaneously and in parallel. When the container 202 is removed from the docking station 4, the rechargeable battery 210 is configured to release electrical energy to the heater at the same time as the phase change material 27 releases heat, thereby maintaining the temperature of the product in the useable range for longer.

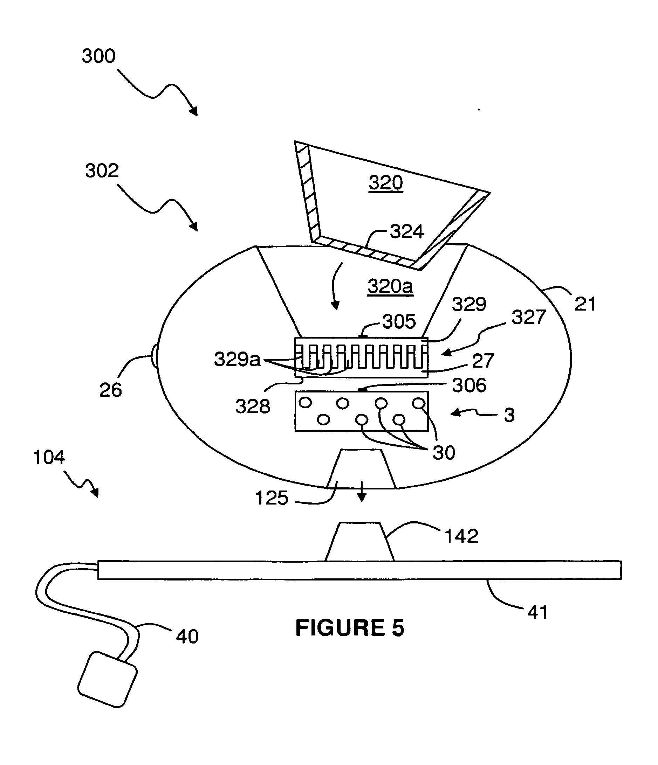

Figure 5 shows a warming device 300 which device 300 is similar to the first, second and third examples, wherein like references depict like features and these will not be described herein.

The device 300 of Figure 5 differs from the device 100 of figure 2 in that the container 302 includes a heat storage unit 327 and a removable reservoir 320 that is removably received within a recess 320a of the container 302 and contains the therapeutic or beauty product to be heated. The heat storage unit 327 is in the form of an enclosed container that includes a base 328 that contains phase change material 27 and a top 329 with a plurality of conductive elements 329a extending into the phase change material 27. The top 329 of the heat storage unit 327 forms the lower wall of the recess 320a and receives and thermally contacts the base 324 of the removable reservoir 320 in use. The top 329 is formed of a thermally conductive material, aluminium in this example to facilitate heat transfer from the phase change material 27 to the removable reservoir 320. The base 324 of the removable reservoir 320 is also formed of a thermally conductive material, which is also aluminium in this embodiment, while the side walls of the reservoir are made from a thermally insulating material, plastics in this embodiment. It will be appreciated that any suitable material may be used for both the top 329 and/or the base 324 and sides of the removable reservoir 320. The removable reservoir 320 may also be formed from a single material.

The device 300 also includes a first temperature sensor 305 in thermal contact with the top 329 of the heat storage unit 327 and a second temperature sensor 306 between the heater 3 and the heat storage unit 327.

It will be appreciated by those skilled in the art that the use of a phase change material 27 provides controlled and sustained release, while the conductive elements 329a improve the flow of heat energy within the phase change material 27 and/or from the phase change material 27 to the top 329.

It will also be appreciated that the removability of the reservoir 320 facilitates cleaning of the device 300 between uses.

## Claims

1. A product warming device (300) for heating a product and maintaining the product in a heated state, the device comprising a container (302), a reservoir (320) removably received in a recess (320a) of the container for containing a product, a heater (3) for heating the product and a docking station (104) having or being connectable to a power source, the container having a thermal energy storage means (327) comprising a phase change material (27), the container being releasably connectable to the docking station (104), wherein the device is configured such that, when the reservoir (320) is received, in use, by the container (302) and the container (302) is connected to the docking station (104), the heater (3) is connected to the power source and operable to provide heat to a product contained within the reservoir and to charge the energy storage means (327) and such that when the container is subsequently disconnected from the docking station the energy storage means is operable to release heat energy to the product.

2. Device according to claim 1, wherein the reservoir (320) is in thermal contact with the phase change material (27).

3. Device according to claim 2 further comprising one or more conductive elements (329a) for facilitating thermal transfer between the reservoir and the phase change material (27).

4. Device according to any preceding claims, wherein the thermal energy storage means (327) at least partially surrounds the reservoir (320).

5. Device according to any preceding claim further comprising an outer shell which at least partially surrounds the reservoir (320) and an insulating material (28) located between the outer shell and the reservoir.

6. Device according to any preceding claim, wherein one of the container (302) or docking station (104) comprises a recess (125) for receiving at least a portion (142) of the other of the container (302) and docking station (104).

7. Device according to any preceding claim, wherein the container (302) comprises the heater (3), the releasable connection being configured to electrically connect the heater (3) to the power source such that the heater (3) is supplied, in use, by the power source when the container (302) is connected to the docking station (104).

8. Device according to claim 7, wherein the heater (3) is at least partially located beneath the phase change material (27).

9. Device according to claim 7, wherein the heater (3) is located between the phase change material (27) and the reservoir (320).

10. Device according to any preceding claim further comprising one or more indicators (26) configured to indicate the activation of the heater (3) and/or that the power supply is live or connected.

11. Device according to any preceding claim further comprising one or more indicators (26) configured to indicate that the container (302) and/or reservoir (320) and/or product and/or phase change material (27) is within a predetermined temperature range.

## Patentansprüche

1. Produkterwärmungsvorrichtung (300) zum Erwärmen eines Produkts und zum Erhalten des erwärmten Zustands des Produkts, wobei die Vorrichtung Folgendes umfasst: einen Behälter (302), ein Reservoir (320), das lösbar in einer Vertiefung (320a) des Behälters aufgenommen wird und das Produkt enthält, ein Heizgerät (3) zum Erwärmen des Produkts und eine Andockstation (104), die eine Stromquelle enthält oder an diese anschließbar ist, wobei der Behälter ein Wärmeenergiespeichermittel (327) aufweist, das ein Phasenwechselmaterial (27) enthält, wobei der Behälter lösbar mit der Andockstation (104) verbunden werden kann, wobei die Vorrichtung derart konfiguriert ist, dass, wenn das Reservoir (320) im Gebrauch im Behälter (302) aufgenommen wird und der Behälter (302) mit der Andockstation (104) verbunden ist, das Heizgerät (3) mit der Stromquelle verbunden und einsetzbar ist, um Wärme an ein Produkt bereitzustellen, das im Reservoir enthalten ist und das Energiespeichermittel (327) aufzuladen, und dass, wenn der Behälter daraufhin von der Andockstation getrennt wird, das Energiespeichermittel einsetzbar ist, um die Wärmeenergie an das Produkt freizugeben.

2. Vorrichtung nach Anspruch 1, wobei das Reservoir (320) im thermischen Kontakt mit dem Phasenwechselmaterial (27) steht.

3. Vorrichtung nach Anspruch 2, ferner ein oder mehrere leitende Elemente (329a) umfassend, um die Wärmeübertragung zwischen dem Reservoir und dem Phasenwechselmaterial (27) zu erleichtern.

4. Vorrichtung nach einem der vorhergehenden Ansprüche, wobei das Wärmeenergiespeichermittel (327) das Reservoir (320) wenigstens teilweise umgibt.

5. Vorrichtung nach einem der vorhergehenden Ansprüche, ferner umfassend eine Außenhülle, die das Reservoir (320) wenigstens teilweise umgibt, und ein Isolationsmaterial (28), welches zwischen der Außenhülle und dem Reservoir angeordnet ist.

6. Vorrichtung nach einem der vorhergehenden Ansprüche, wobei der Behälter (302) oder die Andockstation (104) eine Vertiefung (125) aufweist, um wenigstens einen Teil (142) des jeweils anderen Elements, des Behälters (302) oder der Andockstation (104), aufzunehmen.

7. Vorrichtung nach einem der vorhergehenden Ansprüche, wobei der Behälter (302) das Heizgerät (3) umfasst, wobei die lösbare Verbindung konfiguriert ist, um das Heizgerät (3) derart elektrisch mit der Stromquelle zu verbinden, dass das Heizgerät (3) im Gebrauch von der Stromquelle versorgt wird, wenn der Behälter (302) mit der Andockstation (104) verbunden ist.

8. Vorrichtung nach Anspruch 7, wobei das Heizgerät (3) wenigstens teilweise unterhalb des Phasenwechselmaterials (27) angeordnet ist.

9. Vorrichtung nach Anspruch 7, wobei das Heizgerät (3) zwischen dem Phasenwechselmaterial (27) und dem Reservoir (320) angeordnet ist.

10. Vorrichtung nach einem der vorhergehenden Ansprüche, die ferner eine oder mehrere Anzeigen (26) umfasst, die konfiguriert sind, um das Aktivieren des Heizgeräts (3) anzuzeigen und/oder anzuzeigen, dass die Stromversorgung aktiv oder angeschlossen ist.

11. Vorrichtung nach einem der vorhergehenden Ansprüche, die ferner eine oder mehrere Anzeigen (26) umfasst, die konfiguriert sind, um anzuzeigen, dass sich Behälter (302) und/oder Reservoir (320) und/oder Produkt und/oder Phasenwechselmaterial (27) innerhalb eines vorherbestimmten Temperaturbereichs befinden.

## Revendications

1. Dispositif de réchauffage de produit (300) pour chauffer un produit et maintenir le produit dans un état chauffé, le dispositif comprenant un contenant (302), un réservoir (320) reçu de façon mobile dans un évidement (320a) du contenant pour contenir un produit, un élément chauffant (3) pour chauffer le produit et une station d'accueil (104) ayant une source d'alimentation ou étant connectable à une source d'alimentation, le contenant ayant un moyen de stockage d'énergie thermique (327) comprenant un matériau de changement de phase (27), le contenant étant connectable de façon libérable à la station d'accueil (104), dans lequel le dispositif est configuré de sorte que, lorsque le réservoir (320) est reçu en utilisation par le contenant (302) et que le contenant (302) est connecté à la station d'accueil (104), l'élément chauffant (3) est connecté à la source d'alimentation et opérationnel pour fournir de la chaleur à un produit contenu au sein du réservoir et pour charger le moyen de stockage d'énergie (327) et de sorte que, lorsque le contenant est ultérieurement déconnecté de la station d'accueil, le moyen de stockage d'énergie est opérationnel pour libérer l'énergie thermique au produit.

2. Dispositif selon la revendication 1, dans lequel le réservoir (320) est en contact thermique avec le matériau de changement de phase (27).

3. Dispositif selon la revendication 2, comprenant en outre un ou plusieurs éléments conducteurs (329a) pour faciliter un transfert thermique entre le réservoir et le matériau de changement de phase (27).

4. Dispositif selon l'une quelconque des revendications précédentes, dans lequel le moyen de stockage d'énergie thermique (327) entoure au moins partiellement le réservoir (320).

5. Dispositif selon l'une quelconque des revendications précédentes, comprenant en outre une enveloppe externe qui entoure au moins partiellement le réservoir (320) et un matériau isolant (28) situé entre l'enveloppe externe et le réservoir.

6. Dispositif selon l'une quelconque des revendications précédentes, dans lequel l'un parmi le contenant (302) ou la station d'accueil (104) comprend un évidement (125) pour recevoir au moins une partie (142) de l'autre parmi le contenant (302) et la station d'accueil (104).

7. Dispositif selon l'une quelconque des revendications précédentes, dans lequel le contenant (302) comprend l'élément chauffant (3), la connexion libérable étant configurée pour connecter électriquement l'élément chauffant (3) à la source d'alimentation de sorte que l'élément chauffant (3) est alimenté en utilisation par la source d'alimentation lorsque le contenant (302) est connecté à la station d'accueil (104).

8. Dispositif selon la revendication 7, dans lequel l'élément chauffant (3) est au moins partiellement situé en dessous du matériau de changement de phase (27).

9. Dispositif selon la revendication 7, dans lequel l'élément chauffant (3) est situé entre le matériau de changement de phase (27) et le réservoir (320).

10. Dispositif selon l'une quelconque des revendications précédentes, comprenant en outre un ou plusieurs indicateurs (26) configurés pour indiquer l'activation de l'élément chauffant (3) et/ou que l'alimentation électrique est sous tension ou connectée.

11. Dispositif selon l'une quelconque des revendications précédentes, comprenant en outre un ou plusieurs indicateurs (26) configurés pour indiquer que le contenant (302) et/ou le réservoir (320) et/ou le produit et/ou le matériau de changement de phase (27) se trouvent au sein d'une plage de températures prédéterminée.
